# EUROPÄISCHE PATENTSCHRIFT

(11) **EP 3 144 695 B1**
(45) Veröffentlichungstag und Bekanntmachung des Hinweises auf die Patenterteilung: **10.04.2019**
(21) Anmeldenummer: 16001668.9
(22) Anmeldetag: 28.07.2016
(51) Int. Cl.: G01S 7/292, G01S 13/22, G01S 13/524

(54) **VORRICHTUNG UND VERFAHREN ZUR MESSUNG VON POSITION UND GESCHWINDIGKEIT EINES OBJEKTS**
DEVICE AND METHOD FOR MEASURING POSITION AND VELOCITY OF AN OBJECT
DISPOSITIF ET PROCEDE DE MESURE DE POSITION ET DE VITESSE D'UN OBJET

(30) Priorität: 17.09.2015 DE 102015012116
(43) Veröffentlichungstag der Anmeldung: 22.03.2017
(73) Patentinhaber: HENSOLDT Sensors GmbH, 82024 Taufkirchen (DE)
(72) Erfinder: Gierlich, Roland, 89073 Ulm (DE); Appel, Holger, 89077 Ulm (DE)
(74) Vertreter: LifeTech IP Spies & Behrndt Patentanwälte PartG mbB

(56) Entgegenhaltungen:
- EP-A1- 2 821 809
- EP-A2- 1 369 703
- US-A- 5 808 580
- US-A1- 2015 084 805
- US-B1- 6 720 909
- MAIER M W: "Non-uniform PRI pulse-Doppler radar", SYSTEM THEORY, 1994., PROCEEDINGS OF THE 26TH SOUTHEASTERN SYMPOSIUM ON,, 7. März 1993 (1993-03-07), Seiten 164-168, XP002231019, ISSN: 0094-2898

## Beschreibung

Die Erfindung betrifft eine Vorrichtung und ein Verfahren zur Messung von Position und Geschwindigkeit eines beweglichen Objekts, insbesondere eines Flugkörpers, mittels eines Luftraumüberwachungsradars.

Radargeräte zur Luftraumüberwachung, dem englischen Sprachgebrauch folgend auch Air Surveillance Radare genannt, beinhalten üblicherweise azimutal drehende Sende-/Empfangseinrichtungen mit zwei verschiedenen Frequenzkanälen, die jeweils eine zusammenhängende Gruppe von Pulsen mit konstanter Pulswiederholrate absenden bzw. empfangen. Diese zusammenhängende Gruppe von Pulsen wird üblicherweise als Burst bezeichnet. Zwischen unterschiedlichen Bursts wird die Pulswiederholrate verändert bzw. gestaffelt. Eine zusammenhängende Gruppe von Pulsen, die ein Objekt beleuchten, dessen Position und Geschwindigkeit bestimmt werden soll, wird üblicherweise als Zielbeleuchtung oder dem englischen Sprachgebrauch folgend als Dwell bezeichnet. Die Trefferzahl ist die Anzahl der Echosignale innerhalb der Zielbeleuchtung, und die zeitliche Breite der Zielbeleuchtung wird als Verweildauer bezeichnet.

Wird bei vorgegebener Antennendrehrate die eindeutige Reichweite des Radars erhöht, z.B. indem die Pulswiederholrate verringert wird, verringert sich entsprechend die Anzahl Pulse pro Dwell. Dies gilt analog für eine Erhöhung der Antennendrehrate bei vorgegebener eindeutiger Reichweite.

Die Doppler-Verschiebung eines Ziels lässt sich bei Radargeräten mit geringer Pulswiederholrate mittels eines Bursts aufgrund von Aliasing nur mehrdeutig um Vielfache der jeweiligen Pulswiederholrate ermitteln. Um diese Mehrdeutigkeiten auflösen zu können, muss die Pulswiederholrate innerhalb eines Dwells variiert werden. Die Anzahl Pulse pro Burst macht deshalb nur einen Bruchteil der Anzahl Pulse pro Dwell aus.

Eine geringe Anzahl Pulse pro Burst führt zu Problemen bei der Detektion eines beweglichen Objekts, da nur ein geringes Signal-/Rauschverhältnis zur Verfügung steht und nur eine geringe spektrale Auflösung relativ zur Pulswiederholrate gegeben ist. Hierdurch verschlechtert sich auch die Zuverlässigkeit einer der Detektion eines beweglichen Objekts nachgelagerten parametrischen Mehrdeutigkeitsauflösung der ermittelten Doppler-Frequenzen. Die Wahrscheinlichkeit von Falsch-Hypothesen für die Radialgeschwindigkeit eines Ziels nimmt deutlich zu.

In Skolnik, Radar Handbook, Third Edition, McGraw-Hill, 2008, S. 2.6-2.9 ist eine Möglichkeit zur Verbesserung der Detektion und der Messung von Position und Geschwindigkeit eines beweglichen Objekts beschrieben. Hier wird ein Detektor vorgeschlagen, bei dem Gruppen von Pulsen mit konstanter Pulswiederholrate kohärent in einem Intervall prozessiert werden. Dabei erfolgt die Signalverarbeitung blockweise in FIR-Filterbänken. Die Ausgabe der Filter ist mehrdeutig bezüglich Doppler-Frequenz bzw. Geschwindigkeit.

Richards, Fundamentals of Radar Signal Processing, Second Edition, 2014, McGraw-Hill, S. 282,283, beschreibt einen Detektor für bewegliche Objekte, bei dem 8 Signale innerhalb eines Pulswiederhol-Intervalls blockweise mittels einer Fast-FourierTransformation mit acht Stützstellen prozessiert werden. Die Pulswiederhol-Intervalle sind dabei blockweise gestaffelt.

In Ludloff, Praxiswissen Radar und Radarsignalverarbeitung, 4. ergänzte und erweiterte Auflage, Vieweg+Teubner, 2008, S. 7-1 bis 7-6 und 7-46 bis 7-51, wird ebenfalls ein Detektor vorgeschlagen, bei dem Gruppen von Pulsen mit konstanter Pulswiederholrate kohärent in einem Intervall (CPI) prozessiert werden. Nach Ende eines Intervalls werden entsprechende Speicherblöcke ausgelesen und mit denjenigen eines neuen Burst gefüllt. Die ausgelesene Information wird anschließend zur Parameterextraktion bezüglich Geschwindigkeit und Azimut einer nachgelagerten Verarbeitungseinheit zugeführt.

Ein weiteres Verfahren ist aus der US 8,599,060 B2 bekannt. Darin ist ein System zum Vermindern oder Aufheben unerwünschter Signale beim Detektieren von Objekten von Interesse mit einem Erfassungssystem beschrieben. Das Detektionssystem ist dabei ein Antennen basiertes System unter Verwendung von zwei oder mehreren Empfangsstrahlen als Echoantwort auf ein Emissionssignal. Das System zum Vermindern oder Aufheben unerwünschter Signale umfasst eine Eingabeeinrichtung, die so angepasst ist, um aus dem Antennensystem Signale von einem ersten Empfangsstrahl und Signale von zumindest einem zweiten Empfangsstrahl in Reaktion auf das gleiche Emissions-Signal zu empfangen. Es weist ferner eine Kopplungseinrichtung auf, die zum Koppeln der Signale von dem ersten Empfangsstrahl zu den Empfangssignalen von dem zumindest einen zweiten Empfangsstrahl eingerichtet ist, um ein Detektionssignal für die Objekte von Interesse zu erhalten.

Die US 2015/0084805 A1 beschreibt grundlegende Verfahren für ein Puls-Doppler-Radar. Dabei wird eine Mehrzahl von Bursts innerhalb eines Dwells ausgesandt. In einem ersten Verarbeitungsschritt werden die Echos eines jeden Bursts kohärent integriert. In einem nachfolgenden Verarbeitungsschritt werden die derart burst-weise integrierten Signale nicht-kohärent kombiniert.

EP 2 821 809 beschreibt ein weiteres Verfahren zum Detektieren von Zielen durch ein Puls-Doppler-Radar, um Radialgeschwindigkeit eindeutig messen zu können. US 5 808 580 beschreibt ein Radarsystem, das Doppler-Mehrdeutigkeiten vermeidet. US 6720909 beschreibt eine Radaranlage, die nichtüberlappende Pulsgruppen nutzt, um eine eindeutige Detektion von Objekten zu ermöglichen. EP 1 369 703 beschreibt eine Radarsignal-Verarbeitungsanlage, die irreguläre Pulswiederholzeiten nutzt, um eine Filterung von Stördaten zu erreichen.

Bekannte Verfahren orientieren sich an der Segmentierung der Wellenform in Bursts und nutzen dabei die in einem Dwell enthaltene Energie und spektrale Information nicht optimal. Der Informationsgehalt beider Kanäle wird ebenfalls nicht bzw. nicht optimal genutzt.

Es ist daher Aufgabe der Erfindung, eine Vorrichtung zur Messung von Position und Geschwindigkeit eines beweglichen Objekts bzw. ein Verfahren zur Messung von Position und Geschwindigkeit eines beweglichen Objekts zu schaffen, welche bzw. welches die in einem Dwell enthaltene Energie und spektrale Information beider Kanäle besser verwertet.

Diese Aufgabe wird durch die Merkmale der unabhängigen Patentansprüche 1 und 5 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Vorrichtung zur Messung von Position und Geschwindigkeit eines beweglichen Objekts geschaffen, insbesondere eines Flugkörpers mittels eines Luftraumüberwachungsradars, die als Puls-Doppler-Radar ausgebildet ist und ein Filter aufweist, das für das Burst-weise Empfangen von Echo-Signalen einer vorherbestimmten Frequenz eingerichtet ist, wobei das Filter zur kohärenten Verarbeitung empfangener Echo-Signale Burst-übergreifend und in einem variablen Fenster mit unterschiedlicher Pulswiederholrate eingerichtet ist, und einen Detektor aufweist, der zur dreidimensionale Detektion lokaler Maxima bezüglich Entfernung, Azimut und Geschwindigkeit des beweglichen Objekts in den von dem Filter abgegebenen eindeutigen Geschwindigkeitsspektren eingerichtet ist.

Demnach werden nicht-äquidistant abgetastete Echo-Signale unterschiedlicher Bursts kohärent dem Filter zugeführt, so dass eine Puls-weise gleitende Verarbeitung erreicht wird, die sich von einer Burst-weisen blockweisen Realisierung gemäß dem Stand der Technik unterscheidet. Die sich anschließende Ziel-Detektion im Detektor wird ebenfalls Puls-weise gleitend durchgeführt, wobei der Signalraum in drei Dimensionen betrachtet wird. Es erfolgt eine Azimutal-gleitende, Burstübergreifende Geschwindigkeits-Filterung, so dass Verluste im Vergleich zur rein Burst-weisen Verarbeitung signifikant reduziert werden, wodurch die Schätzgenauigkeit der Azimut-Position deutlich erhöht wird. Die dreidimensionale Detektion mit den Parametern Entfernung, Azimut und Geschwindigkeit stellt eine verbesserte Detektion dar, welche mehrdimensional auf eindeutigen Hypothesen für Ziel-Entfernung, -Azimut, und - Radialgeschwindigkeit arbeitet und ohne die sonst übliche Extraktion fertige Zielparameter liefert.

Gemäß der erfindungsgemäßen Vorrichtung ist zwischen dem Filter und dem Detektor ein Signal-Kombinierer angeordnet, der mit einem weiteren Filter verbunden ist, das zum Empfangen von Echo-Signalen einer weiteren Frequenz eingerichtet ist, wobei der Signal-Kombinierer die von den Filtern abgegebenen eindeutigen Geschwindigkeitsspektren kohärent kombiniert.

Hierbei erfolgt eine Verknüpfung zweier Kanäle auf der Signalebene. Dadurch wird eine bekannte Schwäche der kohärenten Integration signifikant reduziert, so dass die ausgeprägten Nebenmaxima im eindeutigen Geschwindigkeits-Spektrum, welche durch Aliasing-Fragmente entstehen, vermieden werden.

Gemäß einer weiteren Ausführungsform der erfindungsgemäßen Vorrichtung ist eine Vielzahl weiterer Filter zum Empfangen von Echo-Signalen weiterer Frequenzen vorgesehen.

Die Detektionsleistung wird dann mit zunehmender Kanalanzahl immer besser, und die Eindeutigkeit der Geschwindigkeitsmessung immer zuverlässiger. Gemäß der Erfindung kann die Geschwindigkeitsmessung auch für mehr als zwei Kanäle unterschiedlicher Frequenzen durchgeführt werden.

Gemäß einer weiteren Ausführungsform der erfindungsgemäßen Vorrichtung gibt der Signal-Kombinierer ein Kreuz-Geschwindigkeits-Leistungsspektrum an den Detektor ab.

Gemäß einer weiteren Ausführungsform der erfindungsgemäßen Vorrichtung ist der Signal-Kombinierer für eine Unterdrückung von Nebenmaxima der eindeutigen Geschwindigkeits-Spektren der Kanäle eingerichtet.

Gemäß einer weiteren Ausführungsform der erfindungsgemäßen Vorrichtung weist das Filter eine Filterbank auf, die auf die Puls-Folge im jeweils aktuellen variablen Fenster ausgelegt ist.

Gemäß der Erfindung wird auch ein Verfahren zur Messung von Position und Geschwindigkeit eines beweglichen Objekts, insbesondere eines Flugkörpers, mittels eines Luftraumüberwachungsradars angegeben, bei dem ein Filter und ein Detektor bereitgestellt werden, wobei in dem Filter Burst-weise Echo-Signale einer vorherbestimmten Frequenz empfangen werden und die empfangenen Echo-Signale Burst-übergreifend und in einem variablen Fenster mit unterschiedlicher Pulswiederholrate verarbeitet werden, so dass im Detektor eine dreidimensionale Detektion lokaler Maxima bezüglich Entfernung, Azimut und Geschwindigkeit des beweglichen Objekts in den von dem Filter abgegebenen eindeutigen Geschwindigkeitsspektren durchgeführt wird.

Gemäß einer Ausführungsform des erfindungsgemäßen Verfahrens wird zwischen dem Filter und dem Detektor ein Signal-Kombinierer bereitgestellt, der mit einem weiteren Filter verbunden ist, das Echo-Signale einer weiteren Frequenz empfängt, wobei die von den Filtern abgegebenen eindeutigen Geschwindigkeitsspektren kohärent kombiniert werden.

Gemäß einer weiteren Ausführungsform des erfindungsgemäßen Verfahrens wird eine Vielzahl weiterer Filter zum Empfangen von Echo-Signalen weiterer Frequenzen bereitgestellt.

Gemäß einer weiteren Ausführungsform des erfindungsgemäßen Verfahrens wird im Signal-Kombinierer ein Kreuz-Geschwindigkeits-Leistungsspektrum erzeugt, das an den Detektor abgegeben wird.

Gemäß einer weiteren Ausführungsform des erfindungsgemäßen Verfahrens unterdrückt der Signal-Kombinierer Nebenmaxima der eindeutigen Geschwindigkeits-Spektren der Kanäle.

Gemäß einer weiteren Ausführungsform des erfindungsgemäßen Verfahrens weist das Filter eine Filterbank auf, die auf die Puls-Folge im jeweils aktuellen variablen Fenster ausgelegt ist.

Aufgrund der erfindungsgemäßen kohärenten Verarbeitung wird eine verbesserte Empfindlichkeit im Rauschen sowie eine Vergrößerung des Signal-Rauschabstands erzielt. Die Rauschschwelle im Detektor kann abgesenkt werden, so dass schwächere Ziele detektiert oder die Reichweite erhöht werden kann.

Nachfolgend werden einige Ausführungsbeispiele anhand der Zeichnung näher erläutert. Es zeigen:
- Fig. 1: ein Blockdiagramm einer erfindungsgemäßen Vorrichtung,
- Fig. 2: in einem Diagramm Ausgangssignale eines Filters der Vorrichtung aus Fig. 1,
- Fig. 3: in einem Diagramm Ausgangssignale eines Signal-Kombinierers der Vorrichtung aus Fig. 1, und
- Fig. 4: schematisch ein Filter mit variablem Fenster.

In den Figuren sind gleiche oder funktional gleichwirkende Bauteile mit den gleichen Bezugszeichen versehen.

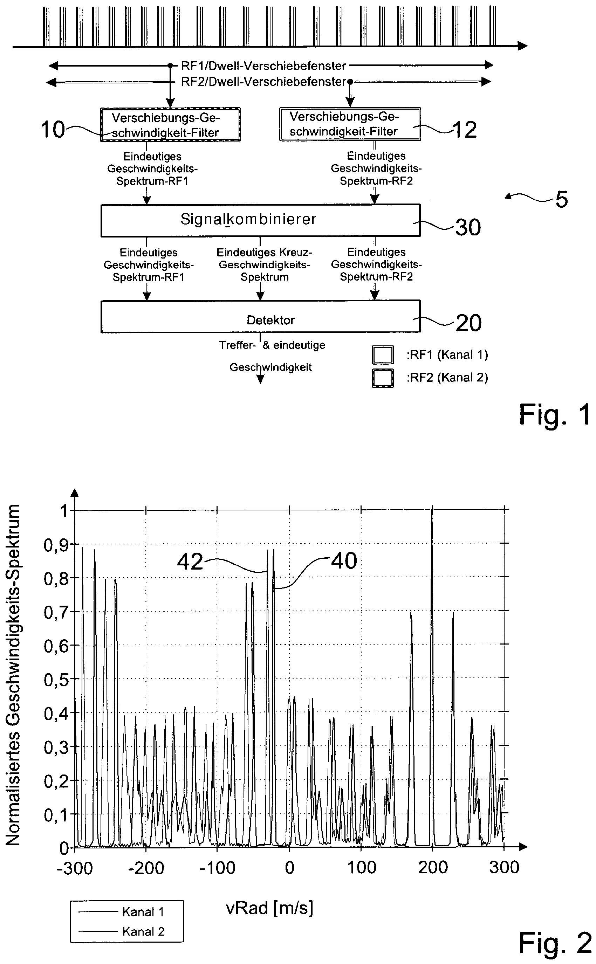

Im Folgenden wird unter Bezugnahme auf Fig. 1 eine erste Ausführungsform zur Verarbeitung von Puls-Doppler Signalen mit gestaffelten Pulswiederholraten in einem Radargerät gezeigt.

Die Vorrichtung 5 weist ein Filter 10 auf, wobei in dem Filter Burst-weise Echo-Signale einer vorherbestimmten Frequenz empfangen werden. Das Filter 10 verarbeitet die empfangenen Echo-Signale Burst-übergreifend und in einem variablen Fenster mit unterschiedlicher Pulswiederholrate. Demnach erfolgt eine Puls-weise gleitende Geschwindigkeits-Filterung. Das Filter 10 erlaubt eine Integration von Pulsen in einem variablen Fenster mit variabler Pulswiederholrate. Eine Filterbank im Filter 10 ist dabei exakt ausgelegt auf die Puls-Folge im jeweils aktuellen variablen Fenster. Ein Beispiel für eine Filterbank wird weiter unten angegeben.

Durch die Konfiguration der Filterbank im Filter 10 ist eine optimale Anpassung an eine Antennenfunktion des Radargeräts möglich, d.h. das Filter 10 kann als "Matched Filter" bereitgestellt werden. Des Weiteren kann auch eine Unterdrückung von spektral aufgeweitetem Clutter erfolgen. Als Ausgangssignal erfolgt im Filter 10 eine Berechnung des eindeutigen Geschwindigkeits-Spektrums der empfangenen Echo-Signale. Dabei wird ein maximaler kohärenter Integrationsgewinn über die gesamte Zielbeleuchtung erreicht.

Das von dem Filter 10 abgegebene Signal kann direkt einem Detektor 20 zugeführt werden. Im Detektor 20 wird eine dreidimensionale Detektion lokaler Maxima bezüglich Entfernung, Azimut und Geschwindigkeit des beweglichen Objekts in den von dem Filter 10 abgegebenen eindeutigen Geschwindigkeitsspektren durchgeführt. Somit erfolgt eine Detektion von Zielen auf Basis der eindeutigen Geschwindigkeitsspektren, wobei durch die dreidimensionale Detektion von lokalen Maxima ein teilweiser Entfall der üblichen Extraktions-Verfahren erfolgen kann.

Im Einzelnen läuft die Verarbeitung im Detektor 20 wie folgt ab:
1. Die vom Filter 10 gelieferten Hypothesen (Signalamplituden) für Geschwindigkeit, Azimut und Entfernung werden auf die Eigenschaft "lokales Maximum" hin geprüft.
2. Es folgt ein Vergleich der Hypothesen mit einer vordefinierten, im einfachsten Falle konstanten Schwelle, zum Beispiel der sogenannten Rauschschwelle.
3. Wenn beide Bedingungen gemäß 1. und 2. erfüllt sind, ist die Verarbeitung beendet. Sämtliche relevanten Zielinformationen (d.h. Geschwindigkeit, Entfernung und azimutale Position) liegen aufgrund des dreidimensionalen Signalraums bereits vor.

Die Konfiguration aus Filter 10 und ein Detektor 20 stellt eine mögliche Ausführungsform der Erfindung dar. Die Detektionsleistung der Vorrichtung 5 wird mit zunehmender Kanalanzahl immer besser, und die Eindeutigkeit der Geschwindigkeitsmessung immer zuverlässiger. Gemäß der Erfindung kann die Geschwindigkeitsmessung auch in zwei oder mehr Kanälen unterschiedlicher Frequenzen durchgeführt werden. Dazu ist zwischen dem Filter 10 und dem Detektor 20 ein Signal-Kombinierer 30 angeordnet, der mit einem weiteren Filter 12 verbunden ist, das zum Empfangen von Echo-Signalen einer weiteren Frequenz eingerichtet ist. Der Signal-Kombinierer 30 kombiniert die von den Filtern abgegebenen eindeutigen Geschwindigkeitsspektren ihres jeweiligen Kanals.

Das weitere Filter 12 ist dabei mit gleicher Funktionalität wie das Filter 10 ausgeführt, d.h. die empfangenen Echo-Signale werden Burst-übergreifend und in einem variablen Fenster mit unterschiedlicher Pulswiederholrate verarbeitet. Demnach erfolgt im Signal-Kombinierer 30 eine Verknüpfung zweier Kanäle auf der Signalebene, so dass die ausgeprägten Nebenmaxima im eindeutigen Geschwindigkeits-Spektrum, welche durch Aliasing-Fragmente entstehen, vermieden werden. Im Signal-Kombinierer 30 wird ein Kreuz-Geschwindigkeits-Leistungsspektrum erzeugt, das an den Detektor 20 abgegeben wird.

Diese Vorgehensweise lässt sich auf eine Vielzahl weiterer Filter zum Empfangen von Echo-Signalen weiterer Frequenzen erweitern.

Die Vorteile der in Fig. 1 gezeigten Vorrichtung liegen in dem maximalen kohärenten Integrationsgewinn durch Integration aller verfügbaren Pulse, dem stark reduzierte Beam Shape Loss durch gleitende Filterung, der impliziten Mehrdeutigkeits-Auflösung durch eindeutige Geschwindigkeitsfilter (kein Informationsverlust durch mehrstufiges Verfahren), der Ausnutzung beider Frequenzkanäle (auf Signalebene) zur Unterdrückung von Falsch-Hypothesen und der hochgenauen Azimut-Schätzung durch puls-weise gleitendes Verfahren.

Folgende Varianten sind dabei denkbar. Es kann eine Staffelung der Pulswiederholrate (PRF) block-weise im konventionellen Burst-Schema, eine PRF-Staffelung von Puls zu Puls identisch für beide Kanäle oder eine PRF-Staffelung von Puls zu Puls verschieden für beide Kanäle (innerhalb der technischen Grenzen des Senders) erfolgen.

Im folgenden Beispiel wird eine Signalform (englisch: waveform design) mit folgenden Eigenschaften angenommen: Der erste Kanal, der dem Filter 10 zugeführt wird, weist eine Frequenz von 2.860GHz auf. Der zweite Kanal, der dem weiteren Filter 12 zugeführt wird, weist eine Frequenz von 2.760GHz auf. Die Antennendrehrate beträgt 12 rpm, die Antennen-Halbwertsbreite 1.45°. Die Pulswiederholung erfolgt in vier Pulsintervallen von ca. 1580 µs bis 1890 µs. Es werden sechs Pulse pro Burst abgegeben.

In Fig. 2 werden die eindeutigen Geschwindigkeits-Spektren 40, 42 für beide Kanäle am Ausgang des Filters 10 bzw. des weiteren Filters 12 und eine zufällig gewählte Lage im Abtastschema dargestellt (normiert auf Maximum). Das zu bestimmende Objekt hat eine Radialgeschwindigkeit von exakt +200m/s. Offenbar lässt die Wellenform eines einzelnen Kanals viele Hypothesen der Radialgeschwindigkeit zu, erkennbar an den zahlreichen Nebenmaxima in den eindeutigen Geschwindigkeits-Spektren 40, 42. Bei schlechtem Signal-Rausch-Verhältnis wird die Bestimmung der eindeutigen Geschwindigkeit aus dem Spektrum 40 oder 42 instabil.

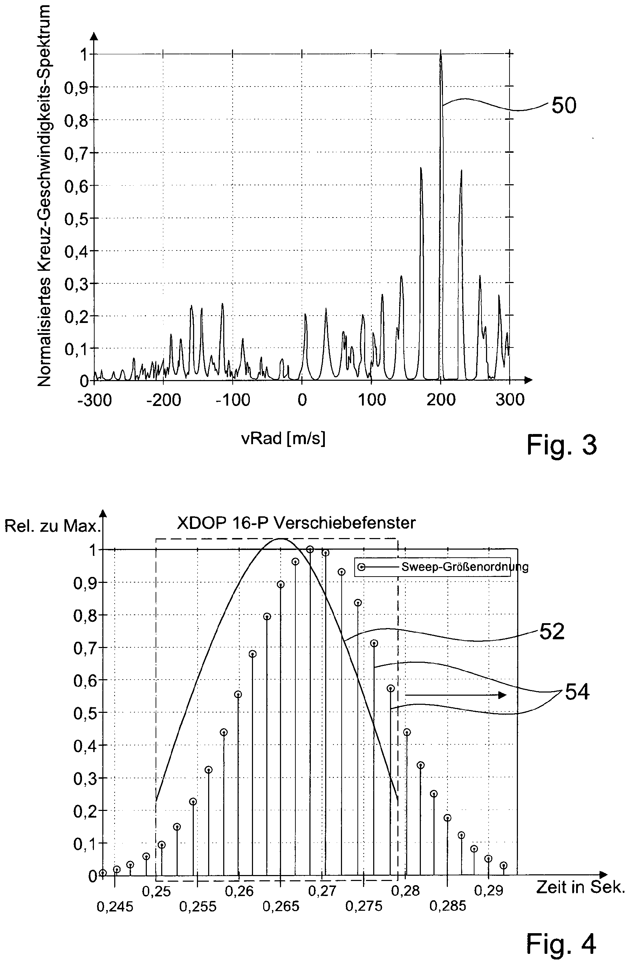

Fig. 3 zeigt das aus den jeweiligen eindeutigen Geschwindigkeits-Spektren 40, 42 gebildete Kreuz-Geschwindigkeits-Spektrum 50 am Ausgang des Signal-Kombinierers 30. Das Zusammenführen beider Kanäle bewirkt eine deutliche Unterdrückung der Nebenmaxima. Die Wahrscheinlichkeit von Falsch-Hypothesen wird somit deutlich reduziert.

In Fig. 4 ist ein Beispiel für ein an die Antennenfunktion angepasstes Filter 10 oder 12 gezeigt. Die Filterfunktion wird durch die Kurve 52 beschrieben, die in ihrer Breite der Antennenfunktion entspricht. Dabei werden mehrere Pulse 54, im gezeigten Beispiel sechzehn, Burst-übergreifend verarbeitet und entsprechend der Filterfunktion 52 gewichtet.

Es wurden weitere Untersuchungen des beschriebenen Verfahrens bzw. der Vorrichtung sowohl anhand von simulierten als auch aufgezeichneten Radar-Signalen durchgeführt. Die Funktionsfähigkeit insbesondere des "Sliding Velocity" Filters 10, 12 konnte gezeigt werden. Die erwarteten spektralen Eigenschaften und der gegenüber der konventionellen Verarbeitung stark verbesserte Gewinn im Signal-Rausch-Verhältnis, der bis zu 5dB betragen kann, was einer Reichweitenerhöhung des Radargeräts um ca. 33% entspricht, wurden durch Echtdaten-Auswertung bestätigt.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Vorrichtung zur Messung von Position und Geschwindigkeit eines beweglichen Objekts, insbesondere eines Flugkörpers mittels eines Luftraumüberwachungsradars, die als Puls-Doppler-Radar ausgebildet ist und ein Filter (10) aufweist, das für das Burst-weise Empfangen von Echo-Signalen einer vorherbestimmten Frequenz eingerichtet ist, wobei das Filter ausgebildet ist, um empfangene Echo-Signale Burst-übergreifend und in einem variablen Fenster mit unterschiedlicher Pulswiederholrate kohärent zu verarbeiten, und einen Detektor (20) aufweist, der zur dreidimensionale Detektion lokaler Maxima bezüglich Entfernung, Azimut und Geschwindigkeit des beweglichen Objekts in den von dem Filter abgegebenen eindeutigen Geschwindigkeitsspektren eingerichtet ist,
**dadurch gekennzeichnet, daß**
zwischen dem Filter (10) und dem Detektor (20) ein Signal-Kombinierer (30) angeordnet ist, der mit einem weiteren Filter (12) mit gleicher Funktionalität wie das Filter (10) verbunden ist, das zum Empfangen von Echo-Signalen einer weiteren Frequenz eingerichtet ist, wobei der Signal-Kombinierer (30) die von den Filtern (10, 12) abgegebenen eindeutigen Geschwindigkeitsspektren kohärent kombiniert und ein Kreuz-Geschwindigkeits-Leistungsspektrum an den Detektor abgibt.

2. Vorrichtung nach Anspruch 1, bei der eine Vielzahl weiterer Filter zum Empfangen von Echo-Signalen weiterer Frequenzen vorgesehen ist.

3. Vorrichtung nach Anspruch 1 oder 2, bei der der Signal-Kombinierer (30) für eine Unterdrückung von Nebenmaxima der eindeutigen GeschwindigkeitsSpektren der Kanäle eingerichtet ist.

4. Vorrichtung nach einem der Ansprüche 1 bis 3, bei der das Filter (10) eine Filterbank aufweist, die auf die Puls-Folge im jeweils aktuellen variablen Fenster ausgelegt ist.

5. Verfahren zur Messung von Position und Geschwindigkeit eines beweglichen Objekts, insbesondere eines Flugkörpers mittels eines Luftraumüberwachungsradars, bei dem ein Filter (10) und ein Detektor (20) bereitgestellt wird, wobei in dem Filter (10) Burst-weise Echo-Signale einer vorherbestimmten Frequenz empfangen werden und die empfangenen Echo-Signale Burst-übergreifend und in einem variablen Fenster mit unterschiedlicher Pulswiederholrate verarbeitet werden, so dass im Detektor (20) eine dreidimensionale Detektion lokaler Maxima bezüglich Entfernung, Azimut und Geschwindigkeit des beweglichen Objekts in den von dem Filter abgegebenen eindeutigen Geschwindigkeitsspektren durchgeführt wird,
**dadurch gekennzeichnet, daß**
zwischen dem Filter (10) und dem Detektor (20) ein Signal-Kombinierer (30) bereitgestellt wird, der mit einem weiteren Filter (12) gleicher Funktionalität wie das Filter (10) verbunden ist, das Echo-Signale einer weiteren Frequenz empfängt, wobei die von den Filtern (10, 12) abgegebenen eindeutigen Geschwindigkeitsspektren kohärent kombiniert werden, wobei im Signal-Kombinierer (30) ein Kreuz-Geschwindigkeits-Leistungsspektrum erzeugt wird, das an den Detektor abgegeben wird.

6. Verfahren nach Anspruch 5, bei der eine Vielzahl weiterer Filter zum Empfangen von Echo-Signalen weiterer Frequenzen bereitgestellt werden.

7. Verfahren nach Anspruch 5 oder 6, bei der der Signal-Kombinierer (30) Nebenmaxima der eindeutigen Geschwindigkeits-Spektren der Kanäle unterdrückt.

8. Verfahren nach einem der Ansprüche 5 bis 7, bei der das Filter (10) eine Filterbank aufweist, die auf die Puls-Folge im jeweils aktuellen variablen Fenster ausgelegt ist.

## Claims

1. Device for measuring the position and speed of a movable object, in particular a missile, by means of an airspace monitoring radar which is designed as a pulse-Doppler radar and comprises a fitter (10) for receiving, in bursts, echo signals having a predefined frequency, the filter being designed to coherently process received echo signals throughout the burst and in a variable window having different pulse repetition rates, and said device comprising a detector (20) for the three-dimensional detection of local maxima with respect to the distance, azimuth and speed of the movable object in the unambiguous speed spectra output by the filter, **characterized in that** a signal combiner (30) is arranged between the filter (10) and the detector (20) and is connected to a further filter (12) which has the same functionality as the filter (10) and is designed to receive echo signals having a further frequency, the signal combiner (30) coherently combining the unambiguous speed spectra output by the filters (10, 12) and outputting a cross-speed-performance spectrum to the detector.

2. Device according to claim 1, wherein a plurality of further filters are provided for receiving echo signals having further frequencies.

3. Device according to either claim 1 or claim 2, wherein the signal combiner (30) is designed to suppress secondary maxima of the unambiguous speed spectra of the channels.

4. Device according to any of claims 1 to 3, wherein the filter (10) comprises a filter bank which is adapted to the pulse sequence in the current variable window in question.

5. Method for measuring the position and speed of a movable object, in particular a missile, by means of an airspace monitoring radar, in which a filter (10) and a detector (20) are provided, echo signals having a predefined frequency being received in bursts in the filter (10), and the received echo signals being processed throughout the burst and in a variable window having different pulse repetition rates such that a three-dimensional detection of local maxima with respect to the distance, azimuth and speed of the movable object in the unambiguous speed spectra output by the filter is carried out in the detector (20), **characterized in that** a signal combiner (30) is provided between the filter (10) and the detector (20) and is connected to a further filter (12) which has the same functionality as the filter (10) and receives echo signals having a further frequency, the unambiguous speed spectra output by the filters (10, 12) being coherently combined, a cross-speed-performance spectrum that is output to the detector being generated in the signal combiner (30).

6. Method according to claim 5, wherein a plurality of further filters are provided for receiving echo signals having further frequencies.

7. Method according to either claim 5 or claim 6, wherein the signal combiner (30) suppresses secondary maxima of the unambiguous speed spectra of the channels.

8. Method according to any of claims 5 to 7, wherein the filter (10) comprises a filter bank which is adapted to the pulse sequence in the current variable window in question.

## Revendications

1. Dispositif de mesure de position et de vitesse d'un objet en mouvement, notamment d'un missile, au moyen d'un radar de surveillance de l'espace aérien, lequel dispositif est formé sous la forme d'un radar Doppler à impulsions et présente un filtre (10) aménagé pour la réception par rafales de signaux d'écho d'une fréquence prédéterminée, le filtre étant formé pour traiter de manière cohérente les signaux d'écho reçus par extension de rafales et dans une fenêtre variable avec un taux de répétition d'impulsions différent, et présentant un détecteur (20) aménagé pour la détection tridimensionnelle de maxima locaux en termes de distance, d'azimut et de vitesse de l'objet en mouvement dans les spectres de vitesse manifestes émis par le filtre, **caractérisé en ce qu'**un combinateur de signal (30) est aménagé entre le filtre (10) et le détecteur (20), lequel combinateur est relié à un autre filtre (12) ayant la même fonctionnalité que le filtre (10), lequel filtre est aménagé pour la réception de signaux d'écho d'une autre fréquence, le combinateur de signal (30) combinant de manière cohérente les spectres de vitesse manifestes émis par les filtres (10, 12) et émettant un spectre de puissance à vitesses croisées au détecteur.

2. Dispositif selon la revendication 1, dans lequel une pluralité d'autres filtres est prévue pour la réception de signaux d'écho d'autres fréquences.

3. Dispositif selon la revendication 1 ou 2, dans lequel le combinateur de signal (30) est aménagé pour une suppression des maxima secondaires des spectres de vitesse manifestes des canaux.

4. Dispositif selon l'une des revendications 1 à 3, dans lequel le filtre (10) présente un groupe de filtres conçu pour la séquence d'impulsions dans la fenêtre variable actuelle respective.

5. Procédé de mesure de position et de vitesse d'un objet en mouvement, notamment d'un missile, au moyen d'un radar de surveillance de l'espace aérien, dans lequel un filtre (10) et un détecteur (20) sont prévus, des signaux d'écho par rafales d'une fréquence prédéterminée étant reçus dans le filtre (10) et les signaux d'écho reçus étant traités par extension de rafales et dans une fenêtre variable avec un taux de répétition d'impulsions différent, de sorte qu'une détection tridimensionnelle de maxima locaux en termes de distance, d'azimut et de vitesse de l'objet en mouvement dans les spectres de vitesse manifestes émis par le filtre est effectuée dans le détecteur (20), **caractérisé en ce qu'**un combinateur de signal (30) est aménagé entre le filtre (10) et le détecteur (20), lequel combinateur est relié à un autre filtre (12) ayant la même fonctionnalité que le filtre (10), lequel filtre reçoit les signaux d'écho d'une autre fréquence, les spectres de vitesse manifestes émis par les filtres (10, 12) étant combinés de manière cohérente, un spectre de puissance à vitesses croisées étant généré dans le combinateur de signal (30), lequel spectre est émis au détecteur.

6. Procédé selon la revendication 5, dans lequel une pluralité d'autres filtres est prévue pour la réception de signaux d'écho d'autres fréquences.

7. Procédé selon la revendication 5 ou 6, dans lequel le combinateur de signal (30) supprime les maxima secondaires des spectres de vitesse manifestes des canaux.

8. Procédé selon l'une des revendications 5 à 7, dans lequel le filtre (10) présente un groupe de filtres conçu pour la séquence d'impulsions dans la fenêtre variable actuelle respective.
